# EUROPÄISCHE PATENTANMELDUNG

(11) **EP 3 732 974 A1**
(43) Veröffentlichungstag der Anmeldung: **04.11.2020**
(21) Anmeldenummer: 20172362.4
(22) Anmeldetag: 30.04.2020
(51) Int. Cl.: A22B 5/00, A22C 17/00

(54) **ZERTEILVORRICHTUNG SOWIE VERFAHREN ZUM ZERTEILEN EINES PRODUKTES**

(30) Priorität: 03.05.2019 DE 102019111508
(71) Anmelder: TVI Entwicklung und Produktion GmbH, 83052 Bruckmühl (DE)
(72) Erfinder: Völkl, Thomas, 83052 Bruckmühl (DE); Rothenaichner, Dominik, 83052 Bruckmühl (DE)
(74) Vertreter: Weickmann & Weickmann PartmbB

(57) **Zusammenfassung**

Zum Zerteilen eines Fleischstückes (P) mit Knochenanteil, insbesondere zum Abtrennen einer Scheibe (S), wird eine Schneidvorrichtung (1) benutzt, die, insbesondere an einem Tragkörper (2), sowohl ein sich bewegendes Messer (3) als auch eine sich bewegende Säge (4) aufweist, um möglichst nur den starren Anteil (Ps) des Fleischstückes (P) mit der Säge (4) durchsägen zu müssen und, meist zeitlich überlappend oder danach, den elastischen Anteil (Pe) mittels des Messers (3) zu zerschneiden, aber möglichst in der gleichen Zerteil-Fuge.

## Beschreibung

### I. Anwendungsgebiet

Die Erfindung betrifft das Zerteilen eines Produktes, insbesondere in Scheiben, welches außer einem elastischen Anteil auch einen demgegenüber weniger elastischen, harten und sogenannten starren Anteil aufweist, insbesondere ein Stück Fleisch mit darin enthaltenem Knochen.

### II. Technischer Hintergrund

Im Rahmen der vorliegenden Erfindung wird unter einem sogenannten elastischen Anteil ein solcher verstanden, der sich zwar nicht vollständig elastisch verhalten muss, sondern sich teilweise auch plastisch verhalten kann, jedoch zumindest in einer Richtung zusammen gedrückt werden kann um mehr als 10 %, besser mehr als 20 %, besser mehr als 30 %.

Unter einem harten und starren Anteil wird dagegen derjenige verstanden, derzumindest in einer Richtung - kaum zusammengedrückt werden kann, also in dieser Richtung in seiner Abmessung bis zur Bruchgrenze dieses starren Anteils um höchstens 10 %, besser höchstens nur 5 %, besser nur höchstens 3 % zusammengedrückt werden kann.

Beim manuellen Zerteilen eines solchen Produktes, insbesondere eines Fleischstückes, wird der elastische Anteil mit einem Messer zerschnitten und der starre Anteil, insbesondere der Knochen, entweder mit einem Beil auseinandergehackt oder mit einer Säge auseinandergesägt, sei es eine handbetätigte Säge oder eine motorbetriebene Säge.

Der Werker kann dabei seine Schneidbewegungen und Sägebewegungen der Größe und Form des Produktes und dessen beiden Anteilen individuell anpassen.

Dabei besteht das Ziel darin, mit der Säge nicht oder möglichst wenig in den elastischen Anteil einzudringen, zum Einen um den durch den erzeugten SägeSchlitz bewirkten Materialverlust zu vermeiden und zum Anderen, um eine Verschmutzung der Schnittflächen des Produktes mit Sägemehl zu minimieren.

Wenn ein solches Zerteilen jedoch automatisch mittels einer Maschine erfolgen soll, wobei qualitativ und auch quantitativ etwa ähnliche Produkte zerteilt werden sollen, ist es schwierig, dies zu erreichen, da die Produkte auch innerhalb einer Charge nicht identisch sind.

### III. Darstellung der Erfindung

### a) Technische Aufgabe

Es ist daher die Aufgabe gemäß der Erfindung, eine automatische Zerteilvorrichtung sowie ein Zerteilverfahren zur Verfügung zu stellen, mit denen Produkte mit sowohl elastischem als auch starrem Anteil mittels eines Messers einerseits und einer Säge andererseits so zerteilt werden können, wobei die Säge möglichst wenig von dem elastischen Anteil zersägt und insbesondere möglichst wenig Sägemehl am Produkt hinterlässt.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Hinsichtlich der automatischen Zerteilvorrichtung wird diese Aufgabe dadurch gelöst, dass sie nicht nur ein Messer, sondern auch eine Säge umfasst, die am Grundgestell, vorzugsweise auf einem gemeinsamen Tragkörper, angeordnet sind.

Dadurch können ein elastischer Anteil und ein starrer Anteil durch das jeweils passende Werkzeug, also Säge oder Messer, zerteilt werden, ohne dass die Säge auch den gesamten elastischen Anteil durchlaufen und im Sägeschlitz zerspanen muss.

Zumindest das Messer oder die Säge sind relativ zum Grundgestell, insbesondere zum Tragkörper, beweglich, und insbesondere ist der Tragkörper selbst relativ zu dem zu zerteilenden Produkt, also dem Grundgestell und einer daran befestigten Produktaufnahme, beweglich.

Denn das Messer soll ja vorzugsweise einen ziehenden Schnitt vollziehen können, also mit seiner scharfen Schneidkante nicht nur lotrecht zur Verlaufsrichtung der Schneidkante in das Produkt gedrückt werden, sondern die Eindringrichtung des Messers soll eine möglichst große Komponente in Verlaufsrichtung der Schneidkante an der Schneidstelle besitzen.

Vorzugsweise handelt es sich bei dem Messer um ein rotierend am Tragkörper angeordnetes, kreisscheibenförmiges oder sichelförmiges Messer- also dessen als Schneidkante ausgebildeter Aussenumfang in einer Umfangsrichtung einen zur Rotationsachse zunehmenden Abstand aufweist - mit der die Schneideebene definierenden Schneidkante entlang des Außenumfanges seines Grundkörpers.

Auch die Säge benötigt eine Relativbewegung zum Produkt und damit zur Produktaufnahme in einer Richtung entlang ihrer Sägekante, also des Außenumfanges ihres Grundkörpers, an der sich die Zähne befinden, um eine Sägewirkung am Produkt zu erzielen.

Durch die - rotierende oder oszillierende - Beweglichkeit von Messer und Säge zum Grundgestell, insbesondere zum Tragkörper, und/oder des Tragkörpers zum Grundgestell, insbesondere zur Produktaufnahme, können diese Relativbewegungen realisiert werden.

Sowohl das Messer als auch die Säge, insbesondere deren Grundkörper, sind vorzugsweise plattenförmig ausgebildet, was jedoch biegsame Platten wie bei einem Sägeband einer Bandsäge nicht ausschließen soll.

Als Sägeebene wird die Ebene in der Mitte der Dicke des plattenförmigen Grundkörpers, also in der Mitte zwischen dessen Hauptflächen, verlaufende Ebene verstanden.

Für die Zwecke der vorliegenden Erfindung werden unter Zähnen oder Sägezähnen Fortsätze verstanden, die über den Rand des plattenförmigen Grundkörpers nach außen vorstehen und in Umfangsrichtung des Grundkörpers durch Zahnzwischenräume beabstandet sind. Sie besitzen an ihrem radial äußeren Ende eine Schneide, deren Verlaufsrichtung insbesondere auch Komponenten quer zur Hauptebene des plattenförmigen Grundkörpers aufweist.

Die Sägekante kann eine Breite - betrachtet in Verlaufsrichtung der Sägekante und gemessen in Dickenrichtung des Grundkörpers - besitzen, die größer ist als die Dicke des Grundkörpers, was üblicherweise durch das sogenannte Verschränken der Zähne, also Ausbiegen der Zähne abwechselnd über die eine Hauptfläche und die andere Hauptfläche des plattenförmigen Grundkörpers hinaus, bewirkt wird, während die Breite des einzelnen Zahnes dabei in aller Regel nur der Dicke des Grundkörpers entspricht.

Die Zähne der Säge können jedoch auch nicht verschränkt sein.
Die Breite der Säge-Kante wird begrenzt durch jeweils eine Sägeschlitz-Ebene, die parallel zur Hauptebene des Grundkörpers verlaufen. Die Hauptebene des plattenförmigen Grundkörpers ist vorzugsweise die Mittelebene zwischen den beiden Hauptflächen, also Vorderseite und Rückseite, des in der Regel eine gleichbleibende Dicke aufweisenden Grundkörpers.

Vorzugsweise ist im Rahmen der Erfindung die Säge-Kante jedoch nicht breiter als die Dicke des Grundkörpers, gemessen in dessen Dickenrichtung, sondern vorzugsweise sogar etwas schmaler. wobei insbesondere die Zähne an ihrem freien Ende eine geringere Breite in Axialrichtung besitzen können als die Dicke des Sägen-Grundkörpers, vorzugsweise jedoch eine um höchstens 20 % geringere Breite.

Dadurch liegt das zu zerteilende Produkt während des Sägevorganges immer zuverlässig an den beiden Hauptflächen der Säge an, sodass das beim Zersägen entstehendes Sägemehl in die Zahnzwischenräume oder Mehl-Vertiefungen oder Mehl-Durchbrüche des Grundkörpers der Säge hineingeschoben wird und kaum am Produkt verbleibt.

Messer und Säge sind vorzugsweise unabhängig voneinander antreibbar, insbesondere hinsichtlich Geschwindigkeit und Richtung, sodass sie sich insbesondere gleichzeitig bewegen können oder auch abwechselnd.

Vorzugsweise sind Messer und/oder Säge am Tragkörper an fixen Befestigungspositionen beweglich angeordnet, um die sie drehbar oder schwenkbar sind oder anderweitig bewegbar sind.

Für spezielle Zerteilaufgaben können jedoch auch die Befestigungspositionen relativ zueinander beweglich ausgebildet sein, entweder aktiv gesteuert beweglich oder auch passiv, zum Beispiel kraftbeaufschlagt wie etwa gefedert, vorzugsweise in Eindringrichtung, beweglich sein.

Im Ergebnis sollten Messer und Säge so gestaltet und/oder dimensioniert und/oder am Grundgestell, insbesondere am Tragkörper, positioniert sein, dass beim Zerteilen eines spezifischen Produktes die Säge beim Zersägen des starren Anteils des Produktes möglichst wenig in den elastischen Anteil eindringt, um dort weder Materialverlust durch zersägtes Material zu bewirken noch allzu viele Sägespäne zu hinterlassen, die aus dem starren Anteil entstehen.

Damit die scharfe Schneidkante des Messers auch leicht starre Anteile des Produktes durchschneiden kann, deren Starrheit größer als die des elastischen Anteils ist, aber kleiner als die des starren Anteils des Produktes, kann die scharfe Schneidkante in der Aufsicht auf die Schneidebene betrachtet auch eine Wellenform oder Zickzackform besitzen.

Das Messer ist am Tragkörper vorzugsweise so angeordnet, dass seine Schneidebene zwischen den Sägeschlitz-Ebenen der Säge oder den äußersten von mehr als zwei Sägeschlitz-Ebenen bei mehreren vorhandenen Sägen liegt oder mit einer dieser äußeren Ebenen zusammenfällt. Bei mehreren vorhandenen Messern gilt dies vorzugsweise für alle Messer.

Wenn an einer Zerteilvorrichtung mehrere Messer vorhanden sind, können deren Schneidebenen vorzugsweise identisch sein, wobei insbesondere die meist konvex gewölbten Messer-Rückseiten dabei in die gleiche Richtung weisen. Denn dadurch wird beim Einfahren eines Messers in einen bereits vom anderen Messer erzeugten Schneidspalt - wie es beim Durchschneiden des Produktes notwendig ist - der abgetrennte Teil, insbesondere die Scheibe, in die gleiche Richtung weggedrückt wie vom ersten Messer.

Wenn dagegen die Messer, insbesondere zwei Messer, mit ihren gewölbten Rückseiten voneinander weg weisen, können deren Schneidebenen auch geringfügig zueinander beabstandet sein und insbesondere parallel verlaufen, bei einem Abstand von vorzugsweise weniger als 2 mm, besser weniger als 1 mm. Dadurch können die Schneidkanten der beiden Messer in Richtung der Schneidebenen sehr nahe beisammen oder gar überlappend angeordnet werden.

Wenn an einer Zerteilvorrichtung mehrere Sägen, insbesondere zwei Sägen, vorhanden sind, ist die Dicke der Grundkörper und/oder die Breite der Sägekante der Sägen vorzugsweise gleich groß, und ihre jeweils zwei Sägeschlitz-Ebenen fallen jeweils zusammen.

Ist dies nicht möglich, weil beispielsweise eine Säge eine geringere Dicke des Grundkörpers und/oder eine geringere Breite der Sägekante aufweist, so liegen die Sägeschlitz-Ebenen der dünneren Säge vorzugsweise zwischen denen der dickeren Säge. Dadurch wird erreicht, dass beim Erreichen eines Sägeschlitzes, der von der einen Säge hergestellt wurde, durch die andere Säge der Versatz der dadurch entstehenden beiden Säge-Flächen am Produkt möglichst gering bleibt.

Meist ist das in Scheiben aufzuschneidende Produkt ein Fleischstrang mit einem solchen Knochenanteil, der
- einerseits einen in Längsrichtung, der grössten Erstreckungsrichtung des Fleischstranges, meist über dessen gesamte Länge verlaufenden, Längsknochen, meist ein Teil des Rückgrates des Tieres, aufweist und
- andereseits von dem Längsknochen in Längsabständen in Querrichtung, meist lotrecht dazu, abzweigende Querknochen, meist Rippen des Tieres, aufweist.

Der Fleischstrang wird mit seiner Längsrichtung in Längsrichtung der Produktaufnahme, insbesondere des Formrohres, liegend angeordnet und darin in Längsrichtung vorwärtsgeschoben und die Scheiben lotrecht dazu abgetrennt, sodass also die Schneidebene, also Messerebene und/oder Sägeebene, quer, insbesondere lotrecht, zur Längsrichtung der Produktaufnahme, insbesondere des Formrohres und damit des Längsknochens liegt.

Da bei der Herstellung von Scheiben mit einem vorgegebenen Sollgewicht die Längsposition der Schneidebene am Fleischstrang nicht frei gewählt werden kann z.B. zwischen den Querknochen, muss beim Abtrennen einer Scheibe häufig auch der Querknochen entlang seiner Haupterstreckung durchtrennt werden.

Der in der Figurenbeschreibung dargestellte starre Anteil Ps ist ein Schnitt durch den Querknochen entlang seiner Haupterstreckung sowie ggfs. des Längsknochens, wenn dieser die dargestellten Querknochen verbindet.

Meist befindet sich der Querknochen an oder nahe dem Rand des Querschnittes des Fleischstranges und liegt häufig beim Aufschneiden an einer Innenfläche des Formrohres an oder dieser - mit höchstens geringer Dicke eines elastischen Anteils Pe dazwischen - gegenüber.

Hinsichtlich des Verfahrens zum Zerteilen eines Produktes wird die Aufgabe dadurch gelöst, dass die Säge beim Zersägen des starren Anteils möglichst wenig in den elastischen Anteil eindringt und insbesondere hierzu die Säge relativ zum Grundkörper entsprechend positioniert wird und/oder die Art der Bewegung der Säge und/oder deren Form und Größe entsprechend gewählt wird.

"Möglichst wenig" kann in diesem Zusammenhang bedeuten, dass zum Einen das Vordringen der Säge gestoppt und diese zurück bewegt wird, sobald der von der Säge zu zersägende starre Anteil des Produktes von der Säge vollständig durchtrennt ist, oder nach weiteren höchstens 10 mm, besser weiteren höchstens 5 mm des Vordringens der Säge in den elastischen Anteil.

Zum Anderen kann "möglichst wenig" bedeuten, dass ein Vordringen der Säge in das Produkt, insbesondere in Richtung des Messers, also lotrecht zu der Verlaufsrichtung seiner Sägekante und in der Hauptebene der Säge, spätestens dann gestoppt und diese zurückbewegt wird, wenn die für das Zersägen des starren Anteils benötigte Strecke um mehr als 10 %, besser mehr als 5 %, überschritten ist.

Falls Produkte leicht starre Bereiche aufweisen, deren Starrheit zwischen denen des elastischen Anteils und denen des starren Anteils liegt, können derartige Bereiche - abhängig von deren Größe gemessen in Eindringrichtung des Messers oder der Säge - statt mittels der Säge auch mittels des Messers zerschnitten werden, insbesondere wenn das Messer über eine in der Aufsicht auf die Schneidebene gewellte oder gezackte, Schneidkante verfügt.

Vorzugsweise wird das Zersägen und Zerschneiden nicht vollständig gleichzeitig durchgeführt, sondern bestenfalls zeitlich überlappend oder gar vollständig zeitlich nacheinander, wobei insbesondere mit dem Zersägen des starren Anteils durch die eine oder die mehreren Sägen begonnen wird und danach das zerschneiden des elastischen Anteils durch die eine oder mehreren Messer beginnt

Vorzugsweise wird das Messer bereits möglichst weit in das Produkt eingefahren, während sich die Säge noch im Produkt, vorzugsweise jedoch bereits wieder in der Rückzugsbewegung aus dem Produkt heraus, befindet. Dadurch wird das Produkt in Axialrichtung, also quer zur Schneidebene, noch von der Säge festgehalten.

### c) Ausführungsbeispiele

Ausführungsformen gemäß der Erfindung sind im Folgenden beispielhaft näher beschrieben. Es zeigen:
- **Figur 1:**: eine Zerteilvorrichtung in der Seitenansicht betrachtet quer zur axialen Richtung,
- **Figuren 2a, b:**: unterschiedliche Zerteilvorrichtungen für das gleiche Produkt, betrachtet in axialer Richtung,
- **Figuren 3a** - **c:**: unterschiedliche Zerteilvorrichtungen für ein anderes Produkt,
- **Figur 4:**: eine Zerteilvorrichtung mit mehrteiligem Tragkörper,
- **Figur 5:**: einen Axialschnitt durch die Zerteilvorrichtung während des Zerteilvorganges.

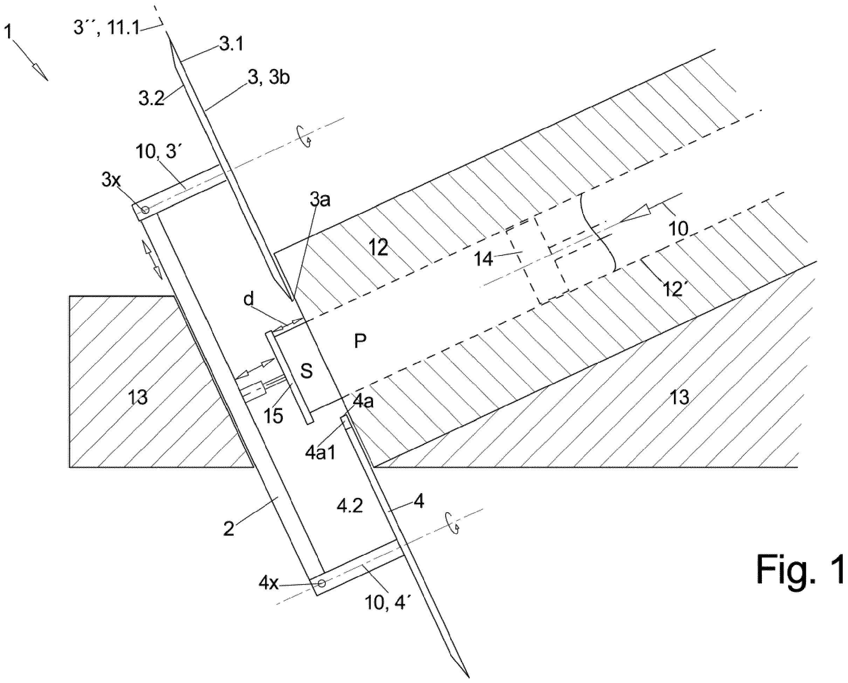

**Figur 1** zeigt eine Schneidvorrichtung 1 mit einem rotierenden, kreisscheiben-förmigen Messer 3 und einer rotierenden, kreisscheiben-förmigen Säge 4 in der Seitenansicht, also betrachtet quer zu deren Rotationsachsen 3', 4'.

Das aufzuschneidende strangförmige oder laibförmige Produkt P ist in einer Produktaufnahme 12, hier dem Formrohr-Hohlraum 12' eines umfänglich geschlossenen, stirnseitig vorne offenen, schräg nach vorne unten geneigten Formrohres 12, aufgenommen und wird von einem Längs-Pressstempel 14 in Längsrichtung 10 - die in diesem Fall zusammenfällt mit der axialen Richtung in Form der Rotationsachsen 3' und 4' von Messer 3 und Säge 4 - über dessen vordere Stirnfläche hinaus vorgeschoben.

Dies erfolgt in diesem Fall bis zu einer Anschlagplatte 15, deren Abstand zur vorderen Stirnfläche des Formrohres 12 einstellbar ist und die Dicke d der von dem Produkt P abzutrennenden Scheibe S bestimmt, denn der Überstand des Produktes P über die vordere Stirnfläche des Formrohres 12 wird unmittelbar vor dieser Stirnfläche abgetrennt von dem Messer 3 einerseits und der Säge 4 andererseits.

Dabei ist das plattenförmige Messer 3 mit seiner durch die schrägstehende Schneidfläche 3a konvex gekrümmten Rückseite 3.2 auf der von der Produktaufnahme 12 abgewandten Seite angeordnet, so dass sich die, insbesondere durch die kreisringförmig umlaufende Schneidkante 3a definierte, Schneidebene 3" unmittelbar an der Stirnfläche des Formrohres 12 befinden kann.

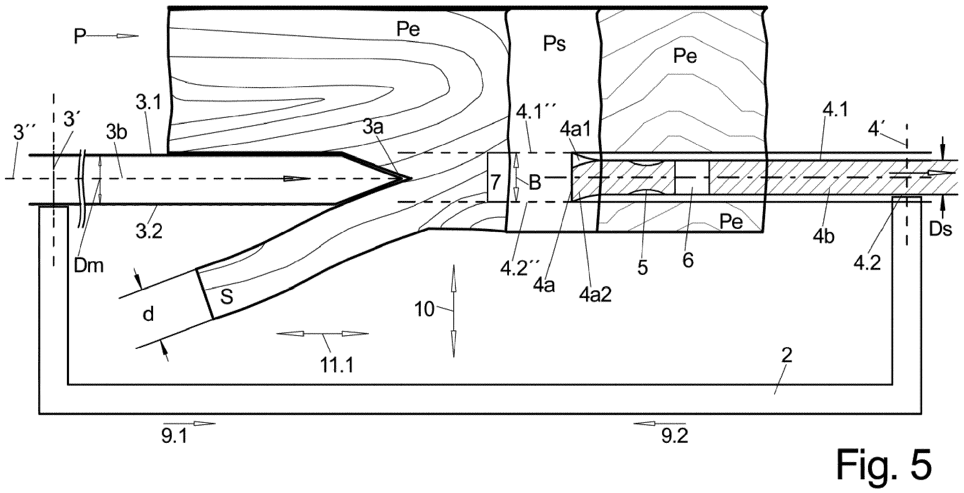

**Figur 5** zeigt in diesem Zusammenhang - wobei das Formrohr 12 aus Übersichtlichkeitsgründen weggelassen wurde - den Zerteilvorgang eines Produktes P, dessen starrer Anteil Ps in dieser Ansicht beidseits von elastischen Anteilen Pe umgeben ist, in einer vergrößerten Schnittdarstellung:
Zum Abtrennen einer Scheibe S war zunächst von rechts durch den dort vorhandenen elastischen Anteil Pe eine Säge 4 in einer Querrichtung 11.1, der Eindringrichtung 9.2 der Säge 4, in das Produkt P eingedrungen und hatte in der Folge auch den starren Anteil Ps insbesondere vollständig durchtrennt und war auf der Gegenseite noch eine geringe Strecke in den dortigen elastischen Anteil Pe eingedrungen und hat dabei einen Sägeschlitz 7 mit der Breite B der Sägekante 4a hinterlassen. Anschließend wurde die Säge 4 entgegen der Eindringrichtung 9.2 zurückbewegt.

**Figur 5** zeigt die Säge 4 während dieser Rückwärtsbewegung.

Dabei ist zu erkennen, dass die Breite B der Sägekante 4a größer ist als die Dicke Ds des sich radial an die Zähne 4a1 nach innen, zur Sägen-Achse 4' hin, anschließenden Sägen-Grundkörpers 4b, da die Sägezähne 4a1, 4a2 abwechselnd zur Seite, also über die Vorderseite 4.1 und Rückseite 4.2 des Sägen-Grundkörpers 4b, hinaus verschränkt sind, und somit der durch die Breite der Sägekante 4a bestimmte Abstand zwischen den beiden Sägeschlitz-Ebenen 4.1" und 4.2" größer ist als die Dicke Ds des Grundkörpers 4b, der zwischen diesen Ebenen 4.1" und 4.2" liegt.

Ferner sind in beiden Seiten 4.1, 4.2 des Sägen-Grundkörpers 4b Mehltaschen 5 in Form von Vertiefungen dargestellt und/oder Mehldurchbrüche 6, die die Dicke des Grundkörpers 4b vollständig durchlaufen, und in denen sich jeweils das beim Zersägen vor allem des starren Anteils Ps entstehende Sägemehl sammeln soll, um es aus dem Produktbereich heraus zu transportieren.

In einer Eindringrichtung 9.1, die in diesem Fall der Eindringrichtung 9.2 der Säge 4 genau entgegengesetzt ist, dringt zu diesem Zeitpunkt bereits von der anderen, der linken Seite, her ein Messer 3 in den elastischen Anteil Pe ein, und beginnt ebenfalls, von dem Hauptteil des Produktes P die Scheibe S abzutrennen.

Diese Eindring-Bewegung kann bereits begonnen haben, während die Säge 4 in das Produkt P eindringt - falls Messer 3 und Säge 4 in ihrer Eindring-Bewegung unabhängig voneinander gesteuert sind - oder sie kann auch erst begonnen haben mit oder nach Beendigung der Eindring-Bewegung der Säge 4, beispielsweise falls Messer 3 und Säge 4 an fixen Befestigungspositionen 3x, 4x auf einen gemeinsamen Tragkörper 2 befestigt sind.

Das dargestellte Messer 3 besitzt in der radialen Schnittdarstellung der **Figur 5** einen symmetrischen Querschnitt. Die Schneidkante 3a definiert die Schneidebene 3" des Messers 3 und an die Schneidkante 3a schließt sich radial nach innen sowohl an der dem Hauptteil des Produktes P zugewandten Messervorderseite 3.1 als auch der davon abgewandten Messerückseite 3.2 jeweils eine schräg zur Schneidebene 3" verlaufende Schneidfläche an, kann aber auch ein nur einseitig angeschliffenes Messer sein, also nur eine schräg zur Schneidebene 3" verlaufende Schneidfläche aufweisen. Die Schneidebene 3" liegt in axialer Richtung 10 zwischen den beiden Sägeschlitz-Ebenen 4.1" und 4.2", also im Dicken-Bereich des von der Säge 4 erzeugten Säge-Schlitzes 7.

Wie ersichtlich, wird sowohl die Schnittfläche der Scheibe S als auch die Schnittfläche des verbleibenden Hauptteiles des Produktes P einen geringen Absatz an der Stelle aufweisen, an der die Schneidkante 3a des Messers 3 den von der Säge 4 bereits hergestellten Sägeschlitz 7 erreicht, aber angesichts einer Breite B des Säge-Schlitzes 7 von weniger als 5 mm und einer Dicke Dm des Messer-Grundkörpers 3b von weniger als 3 mm ist dies optisch akzeptabel.

**Figur 5** zeigt ferner, dass durch die Säge 4 nur in dem relativ schmalen elastischen Anteil Pe - falls vorhanden -, den die Säge 4 durchdringen muss, um den starren Anteil Ps zu erreichen, ein Verlust an elastischem Material Pe bewirkt wird.

Dieser kann noch geringer gehalten werden, wenn auf das Verschränken der Sägezähne 4a1, 4a2 verzichtet wird, und somit die Breite B der Schneidkante 4a die gleiche oder sogar geringer ist als die Dicke Ds des Grundkörpers 4b der Säge 4, denn in letzterem Fall bewirkt die Säge 4 eine Keilwirkung hinter seiner Schneidkante 4a, die im elastischen Anteil Pe die Materialzerspanung minimiert, beim Zersägen des starren Anteils Ps jedoch die Widerstandskraft beim Zersägen erhöht und teilweise zu einem Spalten dieses starren Anteils Ps führt, was je nach Materialeigenschaften dieses starren Anteils jedoch akzeptabel sein kann.

Sowohl das Messer 3 als auch die Säge 4 sind an einem Tragkörper 2 befestigt an einer in diesem Fall unveränderbaren Befestigungsposition 3x bzw. 4x.

Der Tragkörper 2 ist entlang der Messerebene 3" relativ zu einem Grundgestell 13 in einer Querrichtung 11.1 zusammen mit Messer 3 und Säge 4 verfahrbar. Auch die Produktaufnahme 12 ist an diesem Grundgestell 13 befestigt, während die Anschlagplatte 15 vorzugsweise am Tragkörper 2 befestigt ist, insbesondere mit einstellbarem Abstand zu dem Tragkörper 2.

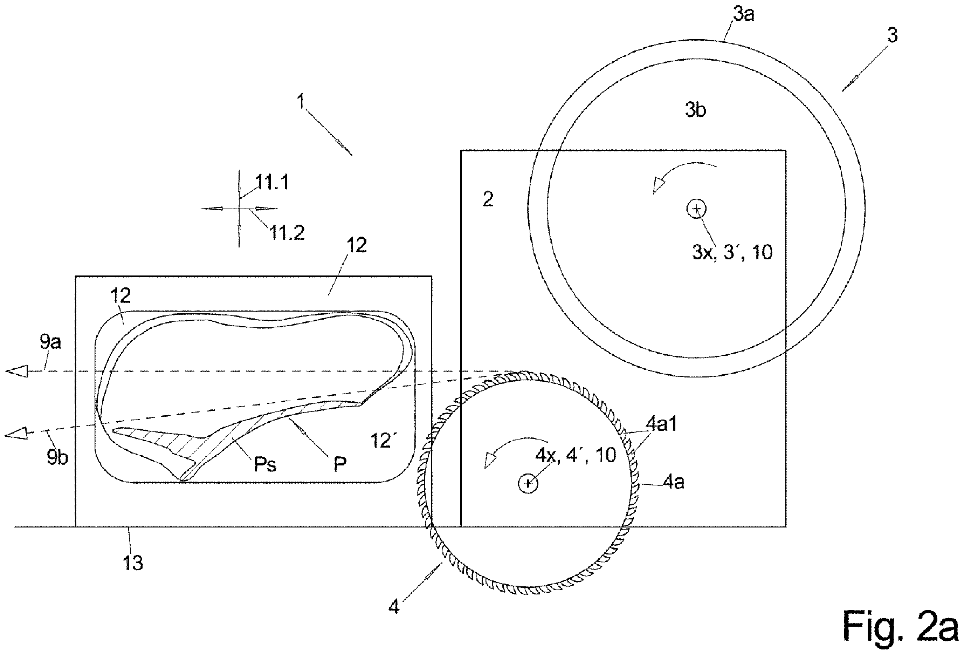

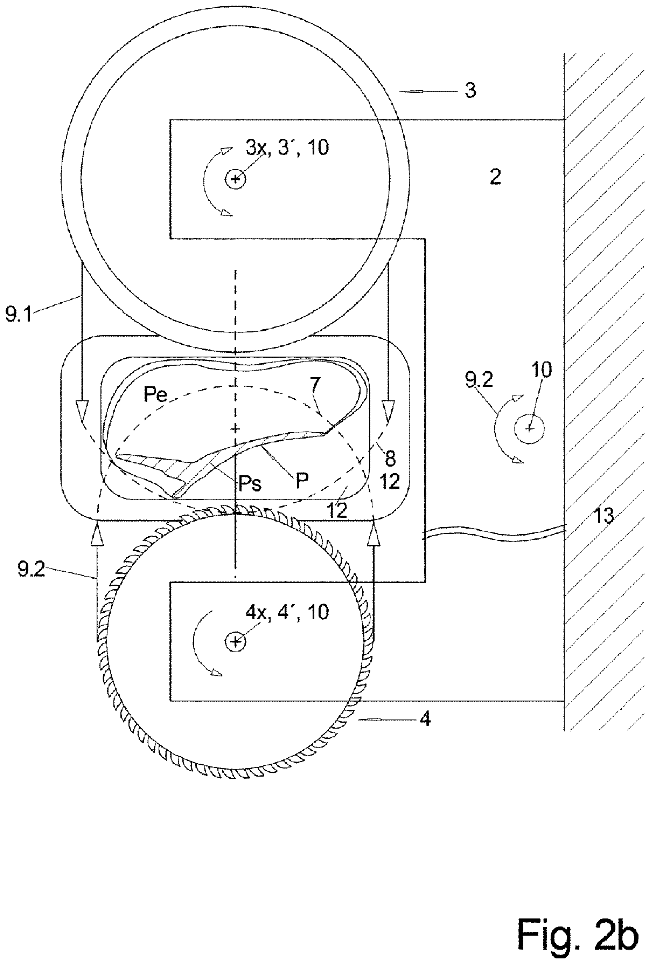

Die **Figuren 2a****,** **2b** zeigen Vorgehensweisen für das Aufschneiden eines knochenhaltigen Kotelett-Stranges als Produkt P betrachtet in axialer Richtung 10.

Dabei ist ersichtlich, dass der Kotelett-Strang mit seiner Fleischseite, also dem großen elastischen Anteil Pe, an der oberen Innenfläche und den beiden angrenzenden Innen-Rundungen des etwa rechteckigen Querschnittes des Formrohr-Hohlraumes 12', dessen Ecken stark abgerundet sind, etwa anliegt, und in der Praxis häufig durch einen nicht dargestellten, gegen den starren Anteil Ps von unten oder rechts unten drückenden Querpress-Stempel sogar angepresst wird.

Der etwa streifenförmige starre Anteil Ps verläuft dann etwa horizontal, etwas nach links unten abfallend.

**Figur 2a** zeigt eine Bauform der Zerteilvorrichtung 1, bei der an einem Tragkörper 2 an fixen Befestigungspositionen 3x, 4x, einerseits das Messer 3 und andererseits die Säge 4 befestigt ist.

Der Tragkörper 2 ist beispielsweise in einer 1. Eindringrichtung 9a verfahrbar relativ zur Produktaufnahme 12, die der Verlaufsrichtung einer der Kanten deren rechteckigen Querschnittes, nämlich der Kante, an der der Fleischanteil, also der elastische Anteil Pe anliegt, verläuft. Eine andere Möglichkeit wäre eine Eindringrichtung 9b, die der Richtung der in dieser Ansicht schräg nach links unten abfallenden Oberseite des starren Anteils Ps entspricht.

In Eindringrichtung 9a bzw. 9b sind die Befestigungspositionen 3x, 4x zueinander beabstandet, wobei in Eindringrichtung 9 die Befestigungsposition 4x weiter vorne liegt, damit bei Bewegung des Tragkörpers 2 in Eindringrichtung 9 die Säge 4 als erstes das Produkt P erreicht.

Die Befestigungspositionen 3x und 4x sind auch quer zur Eindringrichtung 9 beabstandet, indem sich die Befestigungs-Position 3x des Messers 3 - in Längsrichtung 10 betrachtet - oberhalb derjenigen Innenfläche der Produktaufnahme 12 und/oder des Produktes P befindet, an der dessen elastischer Anteil Pe angeordnet ist, und die Befestigungs-Position 4x unterhalb der Produktaufnahme 12, insbesondere der Innenfläche des Formrohres 12, zu dem der starre Anteil Ps benachbart ist.

Ansonsten können die beiden Befestigungspositionen 3x, 4x so nah zueinander angeordnet werden, dass sich Messer 3 und Säge 4 fast berühren, wobei eine Überlappung in dieser Blickrichtung von Messer 3 und Säge 4 lotrecht zur Eindringrichtung 9a bzw. 9b - die in diesem Fall identisch sind wegen der fixen Befestigungspositionen am Tragkörper 2 - vorhanden sein muss.

Von der in **Figur 2a** dargestellten Startposition, in der sich Messer 3 und Säge 4 auf der einen Seite vollständig außerhalb des Produktes P, insbesondere des Formrohr-Hohlraumes 12', befinden, bewegt sich der Tragkörper 2 so weit in Eindringrichtung 9a oder 9b, dass sowohl Messer 3 als auch Säge 4 das Produkt P, insbesondere den Formrohr-Hohlraum 12', vollständig durchlaufen und dadurch vom Produkt P eine Scheibe abtrennen.

Dagegen sind bei der Bauform gemäß **Figur 2b** Messer 3 und Säge 4 bezüglich des Formrohres 12 einander gegenüberliegend in einem solchen Abstand angeordnet, dass der Freiraum dazwischen so groß ist wie der Querschnitt des inneren Freiraumes 12' des Formrohres 12 in dieser Richtung.

Dementsprechend ist die Eindringrichtung 9.1 des Messers 3 der Eindringrichtung 9.2 der Säge 4 entgegen gerichtet.

Der Tragkörper 2 ist in diesem Fall in Blickrichtung der **Figur 2b** U-förmig gestaltet und an den freien Endbereichen seiner frei endenden Schenkel sind das rotierende Messer 3 einerseits und die rotierende Säge 4 andererseits drehend gelagert.

Diese Form des Tragkörpers 2 ist jedoch nicht Voraussetzung zur Realisierung, da bei Anordnung des Tragkörpers 2 in axialer Richtung 10 ausreichend weit von der vorderen Stirnfläche des Produktaufnahme 12 entfernt - wie **Figur 1** erkennen lässt - auch eine Plattenform oder Stabform des Tragkörpers 2 möglich ist, die die beiden Rotationsachsen 3', 4' miteinander verbindet.

Wie **Figur 2b** erkennen lässt, kann ausgehend von der dargestellten Position durch Verfahren des Tragkörpers 2 in Eindringrichtung 9.2 - in diesem Fall der Richtung der Verbindungslinie zwischen den beiden Drehachsen 3' und 4', was jedoch nicht Bedingung ist - zunächst die Säge 4 so weit in das Produkt eingefahren werden, dass der starre Anteil Ps vollständig durchtrennt ist, anschließend der Tragkörper 2 zurückgefahren und dadurch das Messer 3 in Eindringrichtung 9.1 vorwärts gefahren werden, bis dieses so weit in das Produkt P eingefahren ist, dass es den von der Säge 4 erstellten Sägeschlitz 7 über die gesamte Breite des Produktes P quer zu seiner Eindringrichtung 9.1 erreicht hat und damit die Scheibe vom Produkt P abgetrennt ist.

Anschließend wird der Tragkörper 2 in die in **Figur 2b** dargestellte Ausgangslage zurück verfahren, um das Produkt P entgegen der Blickrichtung vorwärts schieben zu können in axialer Richtung 10.

**Figur 2b** lässt auch erkennen, dass die Überlappung der Eindringtiefe von Messer 3 und Säge 4 umso größer gewählt werden muss, und damit der Anteil an von der Säge 4 zerspantem elastischen Anteil Pe umso größer wird, je kleiner der Durchmesser dieser beiden Werkzeuge, insbesondere der Säge 4, ist, weshalb dieser möglichst groß gewählt werden sollte.

Ein Querversatz einer oder beider Rotationsachsen 3', 4' zur Eindringrichtung 9.1, 9.2 ist dann empfehlenswert, wenn in dieser Querrichtung der elastische Anteil Pe und der starre Anteil Ps unsymmetrisch verteilt sind, um zu erreichen, dass die Messerachse 3' in Eindringrichtung 9a möglichst durch den geometrische Zentralbereich des Querschnittes des elastischen Anteils Pe verläuft und umgekehrt die Sägeachse 4' in Eindringrichtung 9.2 möglichst durch den geometrischen Zentralbereich des Querschnittes des starren Anteils Ps verläuft.

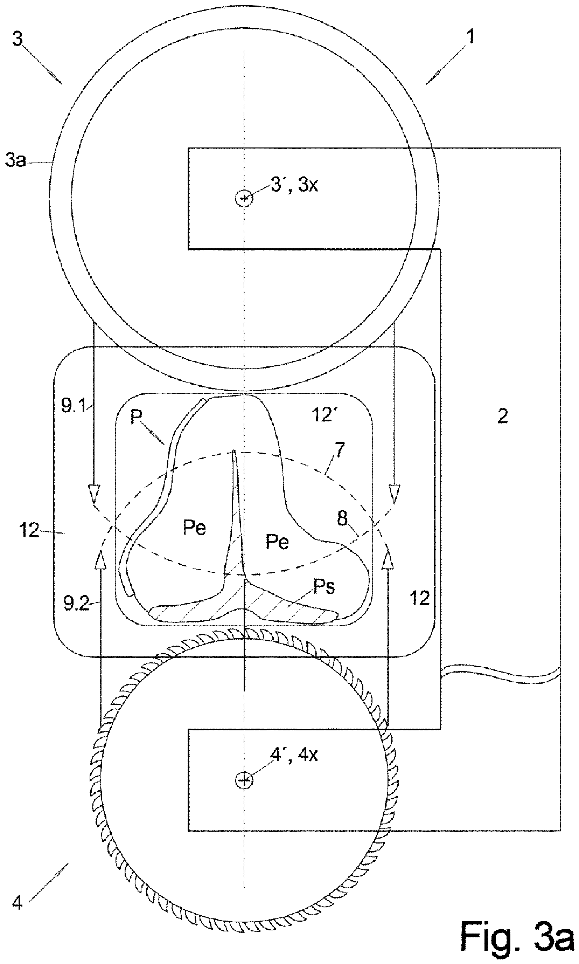

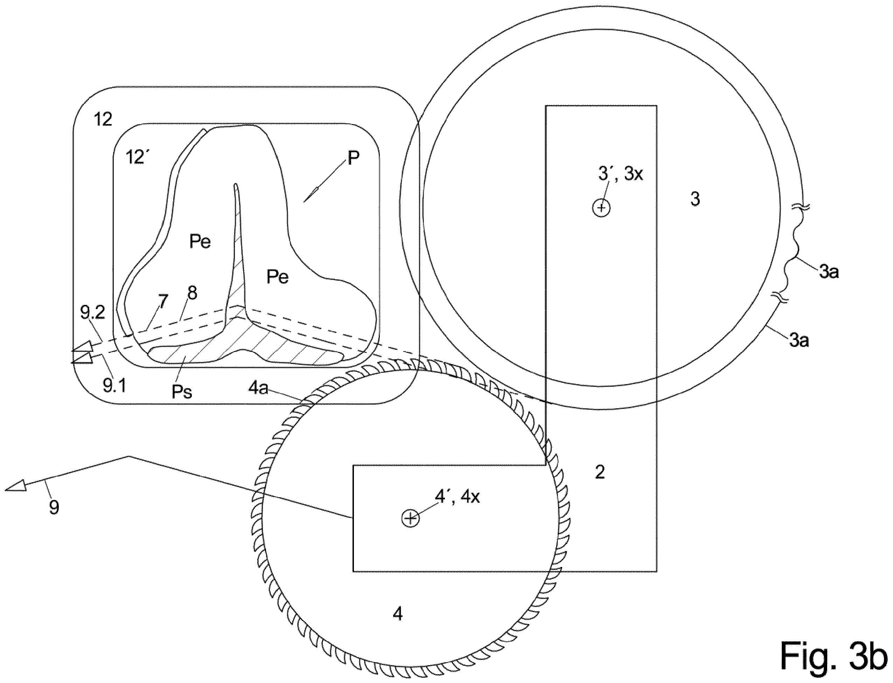

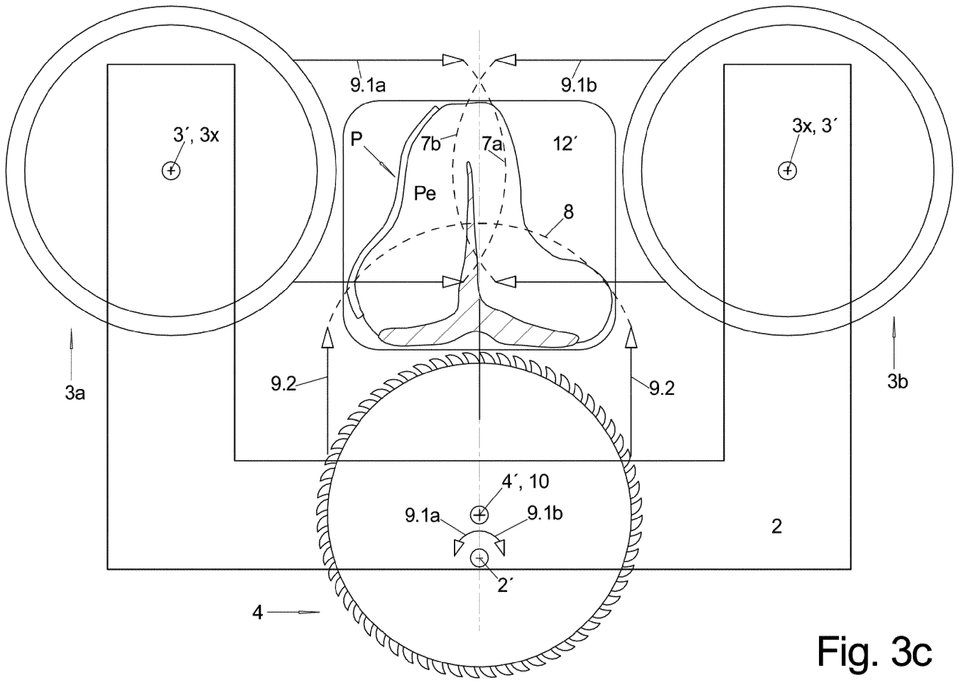

Die **Figuren 3a****,** **b****,** **c** zeigen Vorgehensweisen für das Aufschneiden eines knochenhaltigen T-Bone-Stranges, also mit einem im Querschnitt T-förmigen Knochen, als Produkt P betrachtet in axialer Richtung 10.

Dabei ist ersichtlich, dass der T-Bone-Strang mit seiner Fleischseite, also dem großen elastischen Anteil Pe, an der oberen Innenfläche des rechteckigen Querschnittes des Formrohr-Hohlraumes 12', dessen Ecken stark abgerundet sind, etwa anliegt, und in der Praxis häufig durch einen nicht dargestellten, gegen den starren Anteil Ps von unten drückenden Querpress-Stempel sogar angepresst wird.

Der Querschnitt des starren Anteils Ps besitzt in den **Figuren 3a****,** **b****,** **c** eine auf dem Kopf stehende T-Form mit einem zentralen Stamm und einem an dessen freien Ende quer verlaufenden Querschenkel, wobei dieser etwa streifenförmige Querschenkel des starren Anteils Ps etwa horizontal verläuft und der unteren Fläche des Formrohr-Hohlraumes 12' zugewandt ist, während sich der zentrale Stamm von dort aus im Wesentlichen vertikal nach oben erstreckt in den elastischen Anteil Pe hinein.

**Figur 3a** zeigt eine Bauform der Zerteilvorrichtung 1, bei der an einem Tragkörper 2 an fixen Befestigungspositionen 3x, 4x, einerseits das Messer 3 und andererseits die Säge 4 rotierbar, meist von einem Motor angetrieben, befestigt ist, wobei der Tragkörper 2 wiederum die U-Form gemäß **Figur 2b** besitzt und der freie Abstand zwischen Säge 4 und Messer 3 wiederum der Größe des Produktes P und damit des Formrohr-Hohlraumes 12' in dieser Richtung entspricht.

Für das Zerteilen wird vorgegangen wie anhand **Figur 2b** beschrieben, wobei jedoch wegen der Länge des Stammes die Säge 4 in ihrer Eindringrichtung 9.2 den Großteil des Querschnittes des Produktes P und damit auch dessen elastischen Anteils Pe durchlaufen muss, wenn der starre Anteil Ps vollständig von der Säge 4 durchtrennt werden soll.

Falls der zentrale Stamm des starren Anteils Ps wesentlich weniger hart und stark ist als der Querschenkel, und von seinem freien Ende her über einen Teil oder gar seine ganze Länge auch von dem Messer 3 zerschnitten werden kann, muss die Säge 4 in Eindringrichtung 9.2 natürlich sehr viel weniger weit vorgefahren werden, was den Anteil an zerspantem elastischen Anteil Pe drastisch reduziert.

Auch hier ist zu erkennen, dass sich der von der Säge 4 erzeugte Sägeschlitz 7 und der vom Messer 3 erzeugte Schneidschlitz 8 über die gesamte Breite des Produktes P quer zur den beiden gegeneinander gerichteten, aber parallel verlaufenden Eindringrichtungen 9.1, 9.2 überlappen müssen, um eine Abtrennung einer Scheibe zu bewirken.

Während bei **Figur 3a** also die Eindringrichtungen 9.1, 9.2 etwa der Verlaufsrichtung des zentralen Stammes im Querschnitt des T-förmigen Knochens entsprach, zeigt **Figur 3b** eine Lösung, bei der die Eindringrichtungen 9.1, 9.2 von Messer 3 und Säge 4 nicht entgegengesetzt sind, sondern parallel zueinander verlaufen bzw. identisch sind, und zwar im Wesentlichen quer zur Erstreckungsrichtung des zentralen Stammes des T-förmigen starren Anteils Ps.

Beide werden auch vorzugsweise gleichzeitig durch das Produkt P hindurch bewegt und befinden sich in der in **Figur 3b** dargestellten Ausgangsstellung rechts bzw. rechts unterhalb des Formrohr-Hohlraumes 12' und damit des darin liegenden Produktes P und sind - was für die Erfindung nicht zwingend notwendig ist - in den freien Endbereichen eines in dieser Blickrichtung L-förmigen Tragkörpers 2 drehbar gelagert.

Für das Zerteilen wird der Tragkörper 2 in einer solchen Eindringrichtung 9 bewegt, dass die Sägekante 4a vom, in diesem Fall rechten, freien Ende in den Querschenkel des Knochens eindringt und nach oben, also in Richtung des elastischen Anteils Pe, nur möglichst wenig über diesen vorsteht.

Diese Eindringrichtung 9 kann bis zum Erreichen des zentralen Stammes durch die Säge 4 gegenüber der etwa horizontal angeordneten Unterseite, also Außenseite, des T-förmigen Knochens leicht ansteigen, entsprechend der in dieser Darstellung Oberseite des rechten Teiles des Querschenkels, und ab Erreichen des zentralen Stammes wieder schräg nach unten abfallen entsprechend der Oberseite des Querschnittes des linken Teils des Querschenkels.

Da die Rotationsachse 3' des Messers 3 in dieser Eindringrichtung 9 hinter der Rotationsachse 4' des Messers 4 liegt, und lotrecht zur Eindringrichtung 9 Messer 3 und Säge 4 geringfügig überlappen, zerschneidet durch diese Eindring-Bewegung das Messer 3 den elastischen Anteil Pe vollständig und taucht dabei mit seiner Schneidkante 3a jeweils bis in den Sägeschlitz 7 ein, den das vorlaufende Sägeblatt 4 erzeugt hat, falls das Zersägen vor dem zerschneiden begonnen wurde.

Dies wiederum unter der Voraussetzung, dass das Messer 3 den leicht starren zentralen Stamm des T-förmigen Knochens noch zerschneiden kann, beispielsweise mittels eines in **Figur 3b** angedeuteten, sich dann natürlich vorzugsweise über den gesamten Umfang erstreckenden, Wellenschliff der Schneidkante 3a.

**Figur 3c** zeigt eine Lösung für das gleiche Produkt, bei der zwei Messer 3a, b vorhanden sind, die bezüglich des zentralen Stammes des T-Knochens einander gegenüberliegend an einem - in diesem Fall wiederum U-förmigen - Tragkörper 2 angeordnet sind, und deren freier Abstand dazwischen vorzugsweise mindestens so groß ist wie die Breite des Formrohr-Hohlraumes 12' und damit des Produktes P in diese Richtung.

Die rotierende Säge 4 befindet sich zur Verbindungslinie zwischen den Rotationsachsen 3' der beiden Messer 3a, b quer versetzt, in diesem Fall unterhalb des Formrohr-Hohlraumes 12', mit seiner Sägeachse 4' gelagert an dem verbindenden Schenkel des U-förmigen Tragkörpers 2.

Abhängig von der Härte des zentralen Stammes des T-Knochens wird der Tragkörper 2 mit den an fixen Positionen 3x, 4x befestigten Messern 3a, b und der Säge 4 soweit in Verlaufsrichtung des zentralen Stammes nach oben verfahren, bis die Säge 4 zumindest den Querschenkel des T-Knochens und den notwendigen anschließenden Anteil des zentralen Stammes zersägt hat.

Danach wird der Tragkörper 2 vorzugsweise entgegen dieser Eindringrichtung 9.2 zurückverfahren, bis sich die Säge 4 vollständig außerhalb des Produktes P, vorzugsweise außerhalb des Formrohr-Innenraumes 12', befindet.

Anschließend wird der Tragkörper 2 vorzugsweise in einer zu dieser Eindringrichtung 9.2 quer, vorzugsweise lotrecht, verlaufenden Eindringrichtung 9.1a oder b verfahren, sodass eines der beiden Messer, z.B. 3a von der Seite in den elastischen Anteil Pe auf der einen Seite des zentralen Stammes eintaucht und diesen durchschneidet und gegebenenfalls auch zumindest den freien Endbereich des zentralen Stammes. Zu diesem Zweck ist die Messerachse 3' dieses Messers 3a quer zu dieser Eindringrichtung 9.1a etwa auf Höhe des freien Endes des zentralen Stammes angeordnet, also nicht weiter als etwa 20 %, besser nur 10 %, von dessen Längserstreckung von seinem freien Ende entfernt.

Anschließend wird der Tragkörper 2 entgegen dieser Eindringrichtung 9.1a zurückverfahren, und damit in die vorzugsweise genau entgegengerichtete Eindringrichtung 9.1b soweit verfahren, dass das andere Messer 3b in den elastischen Anteil Pi auf der anderen Seite des zentralen Stammes eindringen, diesen weitestgehend durchschneiden und gegebenenfalls ebenfalls noch den freien Endbereich des zentralen Stammes zerschneiden kann.

Durch diese Lösung kann abhängig von der Struktur des T förmigen Knochens durch die Länge der Eindring-Bewegung in den beiden Eindringrichtungen 9.1a, b festgelegt werden, bis zu welchem Längenanteil der zentrale Stamm des T-Knochens von einem oder beiden der Messern 3a, b und nicht von der Säge 4 durchtrennt wird, wofür beispielsweise eines der beiden Messer 3a, b einen Wellenschliff oder gezahnten Schliff aufweisen kann.

In Figur 3c ist ferner als eine alternative Bewegungsmöglichkeit des Tragkörpers 2 ein Verschwenken um eine Tragkörper-Achse 2', die in axialer Richtung 10 verläuft, dargestellt, mittels der die beiden Messer 3a, b abwechselnd mittels dann bogenförmiger Eindringrichtungen 9.1a, 9.1b in das Produkt P hinein geschwenkt werden können. In diesem Fall würde die Eindringrichtung 9.2 der Säge 4 als lineare Bewegung in Richtung auf das Produkt P, insbesondere den Querschenkel des T-Knochens zu, durch den Tragkörper 2 vorzugsweise beibehalten werden.

Natürlich kann auch bei den Lösungen gemäß den **Figuren 2b****,** **3a** der Tragkörper 2 statt einer linearen Verfahrbewegung um eine solche, in Längsrichtung 10 verlaufende, Schwenkachse hin und her schwenkbar sein, um Messer 3 und Säge 4 in Eingriff am Produkt P zu bringen.

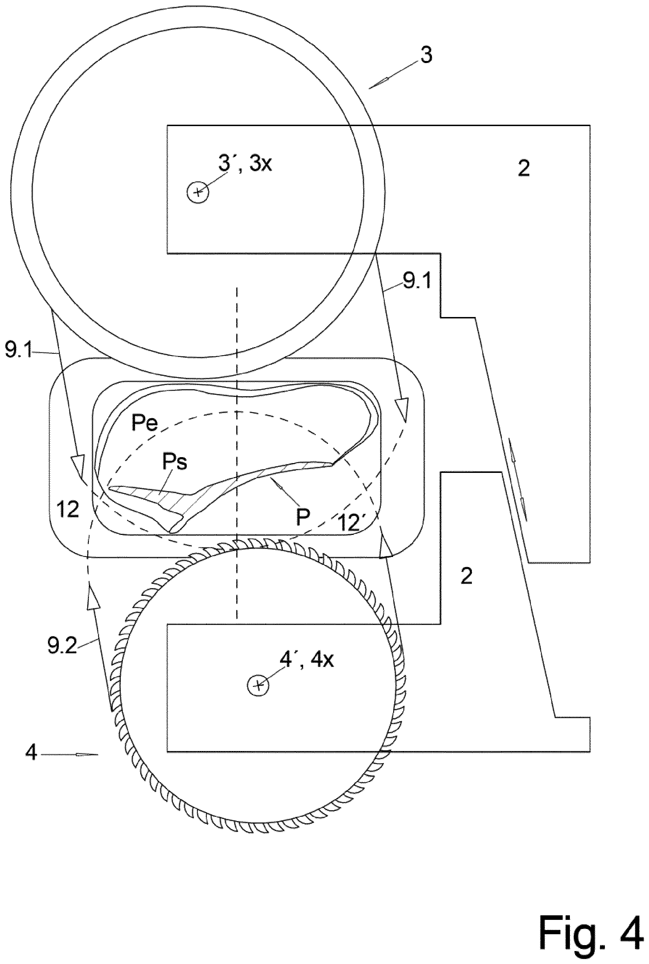

Während die **Figuren 2** **und** **3** Lösungen zeigen, bei denen Messer 3 und Säge 4 an relativ zueinander fixen Befestigungspositionen 3x, 4x an einem Tragkörper 2 befestigt sind, zeigt **Figur 4** eine Lösung, bei der die Befestigungspositionen 3x, 4x relativ zueinander bewegt werden können.

In diesem Fall ist dies dadurch möglich, dass der Tragkörper 2 aus zwei Teilen besteht, die relativ zueinander verschiebbar sind - in diesem Fall in Richtung der Verbindungslinie zwischen den beiden Rotationsachsen 3', 4', was jedoch nicht zwingend ist - und in jedem der beiden Teile eines der beiden Werkzeuge, also Messer 3 oder Säge 4, rotierbar gelagert ist.

Durch die Wahl der Eindringrichtungen 9.1, 9.2 und/oder der Relativbewegung der beiden Teile des Tragkörpers 2 zueinander kann der Form, Lage und Haupterstreckungsrichtung des starren Anteils Ps als auch des elastischen Anteils Pe Rechnung getragen werden in dem Sinn, dass Messer 3 und Säge 4 zueinander, insbesondere die Relativbewegung deren Rotationsachsen, so gewählt werden, dass die Säge 4 für das Durchsägen des starren Anteils Ps einen möglichst geringen Bereich des elastischen Anteils Pe zerspanen muss.

In den vorstehenden Figuren sind sowohl Messer 3 als auch Säge 4 kreisscheibenförmig dargestellt, was jedoch nicht zwingend erforderlich ist:
Vor allem das Messer 3 kann auch eine Sichelform besitzen, also einen radial von der Rotationsachse 3' nach außen verlaufenden Arm aufweisen, an dessen in Drehrichtung weisende Frontkante die Schneidkante 3a ausgebildet ist, und die auch gebogen sein kann.

Auch die Säge 4 kann auf diese Art und Weise gestaltet sein, dann natürlich mit Zähnen 4a1 an der Frontkante. Die Säge 4 kann aber auch ein um die SägeAchse 4' hin und her verschwenkbares Segment, insbesondere Kreissegment sein.

### BEZUGSZEICHENLISTE

- 1: Zerteilvorrichtung
- 2: Tragkörper
- 2': Tragkörpers-Achse
- 3: Messer
- 3': Messerachse, Rotationsachse
- 3a: Schneide
- 3b: Grundkörper des Messers
- 3x: Befestigungsstelle
- 3": Schneidebene
- 3.1: Vorderseite
- 3.2: Rückseite
- 4: Säge
- 4a: Sägekante
- 4a1, 4a2: Sägezahn
- 4b: Grundkörper der Säge
- 4x: Befestigungsstelle
- 4.1: Vorderseite
- 4.2: Rückseite
- 4': Sägeachse, Rotationsachse
- 4": Sägeebene
- 4.1": Sägeschlitz-Ebene
- 4.2": Sägeschlitz-Ebene
- 5: Mehl-Tasche
- 6: Mehl-Durchbruch
- 7: Sägeschlitz
- 8: Schneidschlitz
- 9, 9.1, 9.2: Eindringrichtung
- 9a, b: Eindringrichtung
- 10: Längsrichtung, Axialrichtung, axiale Richtung
- 11.1, 11.2: Querrichtung
- 12: Produktaufnahme, Formrohr
- 13: Grundgestell
- 14: Längs-Pressstempel
- 15: Anschlagplatte

- B: Breite Sägekante
- b: Breite eines Zahnes
- Dm: Dicke des Messers
- Ds: Dicke des Sägen-Grundkörpers
- d: Dicke der Scheibe
- P: Produkt
- Pe: elastischer Anteil
- Ps: starrer Anteil
- S: Scheibe

## Patentansprüche

1. **Zerteilvorrichtung** (1) zum Zerteilen eines Produktes (P), insbesondere in Scheiben (S), welches außer einem elastischen Anteil (Pe) auch einen demgegenüber weniger elastischen, harten, starren Anteil (Ps) aufweist, insbesondere ein Stück Fleisch mit darin enthaltenem Knochen, mit
- wenigstens einen Grundgestell (13),
- wenigstens einem beweglich daran befestigten Messer (3) mit einer Schneidkante (3a),
**gekennzeichnet durch**
- wenigstens eine beweglich am Grundgestell (13) befestigte Säge (4) mit einer Sägekante (4a) mit Zähnen (4a1) daran,
- wobei die Säge (4) mit dem Messer (3) über das Grundgestell (13) verbunden ist.

2. Zerteilvorrichtung nach Anspruch 1,
**dadurch gekennzeichnet, dass**
- Messer (3) und Säge (4) auf einem gemeinsamen Tragkörper (2) angeordnet sind,
- zumindest eines der beiden relativ zum Tragkörper (2) beweglich angeordnet ist
und/oder
- der Tragkörper (2) relativ zu dem ihn tragenden Grundgestell (13) beweglich ist.

3. Zerteilvorrichtung nach einem der vorhergehenden Ansprüche,
**dadurch gekennzeichnet, dass**
- Messer (3) und/oder Säge (4) drehbar, oszillierend schwenkbar oder linear oszillierend am Grundgestell (13), insbesondere am Tragkörper (2), angeordnet sind
und/oder
- falls beide relativ zu dem Grundgestell (13) oder Tragkörper (2) beweglich sind, beide unabhängig voneinander antreibbar sind in ihrer Relativbewegung zum Grundgestell (13) oder Tragkörper (2).

4. Zerteilvorrichtung nach einem der vorhergehenden Ansprüche,
**dadurch gekennzeichnet, dass**
die Befestigungsstellen (3x, 4x) von Messer (3) und Säge (4) am Tragkörper (2) relativ zueinander verstellbar sind, insbesondere aktiv gesteuert verstellbar sind.

5. Schneidvorrichtung nach einem der vorhergehenden Ansprüche,
**dadurch gekennzeichnet, dass**
Messer (3) und Säge (4) so gestaltet und/oder dimensioniert und/oder am Tragkörper (2) positioniert sind, insbesondere abgestimmt auf ein zu zerteilendes Produkt (P), dass die Säge (4) beim Zersägen des starren Anteils (Ps) des Produktes (P) möglichst wenig in den elastischen Anteil (Pe) eindringt.

6. Zerteilvorrichtung nach einem der vorhergehenden Ansprüche,
**dadurch gekennzeichnet, dass**
die scharfe Schneidkante (3a) des Messers (3) in der Aufsicht auf die Schneidebene (3") betrachtet eine Wellenform oder Zickzackform besitzt.

7. Zerteilvorrichtung nach einem der vorhergehenden Ansprüche,
**dadurch gekennzeichnet, dass**
das Messer (3) und die Säge (4) plattenförmig ausgebildet sind und mit ihren Hauptebenen (3", 4") parallel, insbesondere fluchtend, zueinander liegen.

8. Zerteilvorrichtung nach Anspruch 7,
**dadurch gekennzeichnet, dass**
das Messer (3) zur Säge (4) so angeordnet ist, dass die Schneidebene (3") des Messers (3) zwischen den Sägeschlitz-Ebenen (4.1" und 4.2") der Säge (4) liegt.

9. Zerteilvorrichtung nach einem der vorhergehenden Ansprüche, wobei die Zerteilvorrichtung (1) mehrere Messer (3) aufweist,
**dadurch gekennzeichnet, dass**
- entweder die Schneidebenen (3") der Messer (3) identisch sind, insbesondere bei einseitig konvex gewölbten, von der Schneidebene (3") wegweisenden, Messer-Rückseiten (3.2) diese Messer-Rückseiten (3.2) in die gleiche Richtung weisen,
- oder die Schneidebenen (3") der Messer (3) geringfügig, insbesondere um weniger als 2 mm, besser um weniger als 1 mm, zueinander beabstandet sind und die konvex gewölbten Messer-Rückseiten (3.2) voneinander weg weisen

10. Zerteilvorrichtung nach einem der vorhergehenden Ansprüche, wobei die Zerteilvorrichtung (1) mehrere Sägen (4) aufweist,
**dadurch gekennzeichnet, dass**
- entweder der Abstand der Sägeschlitz-Ebenen (4.1" und 4.2"), also die Breite (B) der Sägekante (4a), bei allen vorhandenen Sägen (4) die gleiche ist und diese insbesondere über alle Sägen (4) zueinander fluchten,
- oder bei unterschiedlichen Breiten (B) der Sägekanten (4a) die Sägeschlitz-Ebenen (4.1" und 4.2") der dünneren Säge (4) zwischen den Sägeschlitz-Ebenen (4.1" und 4.2") der dickeren Säge (4) angeordnet sind.

11. Zerteilvorrichtung nach einem der vorhergehenden Ansprüche,
**dadurch gekennzeichnet, dass**
die Schneidebene (3") des Messers (3) zwischen den Sägeschlitz-Ebenen (4.1" und 4.2") der Säge (4), bei mehreren Sägen (4) innerhalb der äußersten Sägeschlitz-Ebene (4.1" und 4.2") der Summe der Sägen (4) angeordnet wird.

12. Zerteilvorrichtung nach einem der vorhergehenden Ansprüche,
**dadurch gekennzeichnet, dass**
die Säge (4) Mehl-Taschen (5) in wenigstens einer ihrer Flächen oder Mehl-Durchbrüche (6) durch den Sägen-Grundkörper (4b) aufweist.

13. **Verfahren** zum Zerteilen eines Produktes (P), insbesondere in Scheiben (S), welches außer einem elastischen Anteil (Pe) auch einen demgegenüber weniger elastischen, harten, starren Anteil (Ps) aufweist, insbesondere ein Stück Fleisch mit darin enthaltenem Knochen, mittels einer Zerteilvorrichtung (1), die sowohl ein Messer (3) als auch eine Säge (4) umfasst,
**dadurch gekennzeichnet, dass**
- der elastische Anteil (Pe) zumindest teilweise mit dem Messer (3) zerschnitten wird und zumindest der starre Anteil (Ps) mit der Säge (4) zersägt wird,
- insbesondere dabei die Säge (4) so wenig wie möglich in den elastischen Anteil (Pe) eindringt.

14. Verfahren nach Anspruch 13,
**dadurch gekennzeichnet, dass**
- leicht starre Bereiche des Produktes, deren Starrheit zwischen der des starren Anteils (Ps) und der des elastischen Anteils (Pe) liegt, mittels des Messers (3), insbesondere mittels dessen gewellter oder gezackter, in der Schneidebene (3") liegender, scharfer Schneidkante (3a) zerschnitten werden.

15. Verfahren nach einem der vorhergehenden Verfahrensansprüche,
**dadurch gekennzeichnet, dass**
das Zersägen einerseits und das Zerschneiden andererseits
- entweder zeitlich nacheinander erfolgt,
- oder zeitlich überlappend erfolgt.
